# EUROPÄISCHE PATENTSCHRIFT

(11) **EP 1 067 156 B1**
(45) Veröffentlichungstag und Bekanntmachung des Hinweises auf die Patenterteilung: **26.03.2003**
(21) Anmeldenummer: 00113620.9
(22) Anmeldetag: 28.06.2000
(51) Int. Cl.: C09B 67/54

(54) **Vefahren zur Herstellung hochkonzentrierter Pigmentpresskuchen**
Process for the preparation of high concentrated pigment presscakes
Procédé de fabrication de gâteaux de filtration de pigments haut concentrés

(30) Priorität: 07.07.1999 DE 19931322
(43) Veröffentlichungstag der Anmeldung: 10.01.2001
(73) Patentinhaber: Clariant GmbH, 65929 Frankfurt am Main (DE)
(72) Erfinder: Unverdorben, Leonard, Dr., 61130 Nidderau (DE); Nickel, Uwe, Dr., 61352 Bad Homburg (DE); Harz, Andreas, 68753 Waghäusel (DE); Tilch, Gunnar, 55126 Mainz (DE)

(56) Entgegenhaltungen:
- EP-A- 0 144 940
- EP-A- 0 180 870
- EP-A- 0 181 545
- EP-A- 0 505 870
- WO-A-98/06561
- DE-A- 2 533 229
- GB-A- 2 043 609
- US-A- 3 528 365
- US-A- 4 615 868

## Beschreibung

Die vorliegende Erfindung betrifft ein Verfahren zur Herstellung hochkonzentrierter Pigmentpreßkuchen, aus denen konzentrierte Pigmentpräparationen hergestellt werden können.

Pigmentpräparationen werden zum Pigmentieren von natürlichen und synthetischen Materialien, wie Anstrichmittel, Druckfarben, Kunststoffe, elektrophotographische Toner, (Pulver)Lacke, Ink-Jet-Tinten, Farbfilter und Saatgut, eingesetzt.

Eine Methode zur Herstellung solcher Präparationen ist der Flush-Prozeß, bei dem ausgehend von einem wäßrigen Pigmentkuchen eine Dispergierung durch Phasenwechsel der Pigmente infolge einer größeren Affinität der Pigmentoberfläche gegenüber organischen Flüssigkeiten erreicht wird. Nach Phasentrennung und Abtrennung des Restwassers unter Kneten im Vakuum erhält man wasserarme Präparationen.

Bei einer anderen Verfahrensweise zur Herstellung konzentrierter Pigmentpräparationen geht man von Pulverpigmenten aus, die zusammen mit Dispergierhilfsmitteln mit Hilfe eines Dispergieraggregates in Wasser oder organische Flüssigkeiten eingearbeitet werden. Die Pigmente werden nach ihrer Synthese, wo sie überwiegend in wäßrigen Systemen anfallen, getrocknet und zu einem Pigmentpulver gemahlen.

Damit in der Präparation fein verteilte und mit dem Dispergiermedium gut benetzte Pigmentteilchen vorliegen, muß das trockene Pigmentpulver, das normalerweise in Agglomeraten vorliegt, mit hohem Energieeintrag und hoher Dispergierdauer zerteilt und in das gewünschte Medium eingearbeitet werden, damit ausreichende Farbstärke, Körnigkeit und Glanz erreicht werden.

Um Pigmentpräparationen mit Pigmentgehalten über 35 Gew.-% Pigment direkt aus Pigmentpreßkuchen herzustellen, muß der Pigmentgehalt im Preßkuchen über 50 Gew.-%, vorzugsweise über 55 Gew.-%, betragen. Da organische Buntpigmente aufgrund ihrer geringen Partikelgröße meist schlecht filtrierbar sind, werden sie nach ihrer Synthese meist über großflächige Filterpressen aus der Mutterlauge isoliert. Üblicherweise kommen hierfür Membranfilterpressen zum Einsatz, die mit Preßdrücken bis zu 10 bar arbeiten. Pigmentpreßkuchen aus einer Membranfilterpresse enthalten üblicherweise höchstens 20 bis 40 Gew.-% Pigment und sind für die Herstellung von konzentrierten Pigmentpräparationen ungeeignet. Durch den Zusatz bestimmter filtrationsunterstützender Additive, wie z.B. die in EP-A-0 180 870 beschriebenen Tenside, läßt sich der Pigmentanteil im Preßkuchen steigern, da die zugesetzten Additive durch Agglomeration der Pigmentteilchen den Entwässerungsgrad erhöhen. Meist stören diese Additive jedoch bei der anschließend für die Herstellung von Pigmentpräparationen notwendigen Dispergierung oder im Anwendungsmedium, in dem die Präparation eingesetzt werden soll.

In der DE-A-25 33 229 wird eine bestimmte Walzenanordnung zur Konzentration von Filterpreßkuchen vorgeschlagen. Der erzielte Feststoffgehalt liegt jedoch deutlich unter 55%.

Die US-A-4 615 868 beschreibt ein Verfahren zur Reinigung von Kupferphthalocyaninpigmenten, wobei zwischenzeitlich auch ein Presskuchen entsteht, der jedoch nicht mehr als 50% Feststoffgehalt aufweist.

Gemäß der EP-A-0 144 940 werden staubungsfreie Pigmentpräparate über einen Pigmentpresskuchen hergestellt, jedoch unter Zusatz verschiedener oberflächenaktiver Mittel.

Es bestand daher die Aufgabe, ein Verfahren zur Herstellung hochkonzentrierter Pigmentpreßkuchen zu entwickeln, das die vorstehend beschriebenen Nachteile überwindet und in einfacher Weise Pigmentpreßkuchen mit einem Pigmentgehalt größer als 50 Gew.-% bereitstellt.

Weiterhin sollen die so hergestellten Pigmentpreßkuchen leicht in wäßrigen oder organischen Medien dispergierbar sein, um daraus in ökonomisch vorteilhafter Weise Pigmentpräparationen herstellen zu können.

Es wurde gefunden, daß diese Aufgabe durch den Einsatz einer Hochdruckfilterpresse ohne den Zusatz von filtrationsunterstützenden Additiven gelöst werden kann.

Gegenstand der Erfindung ist ein Verfahren zur Herstellung von hochkonzentrierten Pigmentpreßkuchen, dadurch gekennzeichnet, daß eine Pigmentsuspension auf einer Hochdruckfilterpresse mit einem Preßdruck von mindestens 16 bar ohne Zusatz von nichtionischen Tensiden, die einen Trübungspunkt in Wasser haben, bis zu einem Pigmentgehalt von mindestens 50 Gew.-% aufkonzentriert wird.

Als Hochdruckfilterpresse eignet sich beispielsweise eine Filterpresse, die durch eine Anzahl von in einer Reihe angeordneten Preßkörpern, die als Hohlzylinder ausgebildet sind und aus einem Distanzierungszylinder und zwei an beiden Enden des Distanzierungszylinders angeordneten Preßplatten, je einer Preßkammer zwischen je zwei benachbarten Preßkörpern, einem zylindrischen Verschiebering je Preßkammer, mit dem die Preßkammer zu schließen und zu öffnen ist, mit je einer ringförmig umlaufenden Dichtung an beiden Enden der Preßkörper und Einrichtungen zum hydraulischen Antrieb der Preßkörper in Richtung ihrer Hintereinanderanordnung gekennzeichnet ist.
Eine solche Filterpresse ist in DE-C1-196 32 964 beschrieben. Um die erfindungsgemäße Aufgabe zu erfüllen, muß die Filterpresse mit einem Druck von mindestens 16 bar, vorzugsweise mindestens 20 bar, betrieben werden. Zweckmäßig sind Preßdrücke von 20 bis 120 bar, vorzugsweise 50 bis 110 bar.

Als Pigmente kommen bevorzugt organische Pigmente in Betracht, insbesondere Azopigmente oder polycyclische Pigmente, wie z.B. Chinacridone, Dioxazine, Phthalocyanine, Perylene, Perinone, Diketopyrrolopyrrole, Anthanthrone und Thioindigo-Pigmente, oder funktionalisierte Pigmente, wie Ladungssteuermittel. Die eingesetzte Pigmentsuspension kann einen Pigmentgehalt von 5 bis 40 Gew.-%, vorzugsweise 7 bis 30 Gew.-%, bezogen auf das Gesamtgewicht der Pigmentsuspension, aufweisen. Das Medium der Pigmentsuspension kann wäßrig, wäßrig-organisch oder organisch sein. Als organische Medien kommen beispielsweise C₁-C₆-Alkohole, chlorierte Benzole, C₃-C₆-Ketone, wie Methyl-ethylketon, C₁-C₆-Carbonsäure-C₁-C₄-alkyl-ester, wie Essigsäureethylester, Xylole, Toluol, Essigsäure, sowie dipolar aprotische Lösemittel, wie z.B. Dimethylformamid oder N-Methylpyrrolidon in Betracht.

Bevorzugt sind jedoch wäßrige Pigmentsuspensionen sowie die daraus hergestellten wäßrigen Pigmentpreßkuchen. Die Pigmentsuspension kann noch weitere bei der Pigmentsynthese verwendete Hilfsmittel, wie z.B. Harzseifen, enthalten, die den Filtrationsprozeß nicht maßgeblich beeinflussen.

Das erfindungsgemäße Verfahren kann bei Temperaturen von 0 bis 100°C, zweckmäßig bei 20 bis 80°C, durchgeführt werden.

In Abhängigkeit vom Preßdruck der Filterpresse und der Art des Pigments kann ein Pigmentgehalt im Preßkuchen von 50 bis zu 75 Gew.-% erreicht werden. In der Regel erreicht man Pigmentgehalte von 55 bis 70 Gew.-%.

Diese hohen Pigmentgehalte werden überraschenderweise auch ohne den Einsatz von filtrationsunterstützenden Additiven, wie z.B. die in EP-A-0 180 870 beschriebenen nichtionischen Tenside, die einen Trübungspunkt in Wasser haben, erreicht.

Die erfindungsgemäß hergestellten Pigmentpreßkuchen können durch Eindispergieren in wäßriges, wäßrig-organisches oder organisches Trägermaterial, z.B. in Harzdispersionen oder in Glykole, zu konzentrierten Pigmentpräparationen weiterverarbeitet werden, worin die Pigmentkonzentration meist zwischen 20 und 55 Gew.-%, vorzugsweise 30 und 50 Gew.-%, liegt.

Im Vergleich mit der Dispergierung des entsprechenden Pulverpigments wurde überraschenderweise gefunden, daß sich bei Verwendung der erfindungsgemäß hergestellten Preßkuchen bei gleichem Energieeintrag die notwendige Dispergierzeit um bis zu 70 % verkürzt. Die notwendige Dispergierzeit ist die Zeit, die erforderlich ist, um ein bestimmtes Farbstärkeniveau in der Pigmentpräparation zu erreichen.

Wäßrige, wäßrig-organische oder organische Pigmentpreßkuchen, insbesondere wäßrige Pigmentpreßkuchen, von Pigmenten aus der Klasse der Azopigmente, der Chinacridone, Dioxazine, Phthalocyanine, Perylene, Perinone, Diketopyrrolopyrrole, Anthanthrone und Thioindigo-Pigmente mit einem Pigmentgehalt von über 55 Gew.-%, beispielsweise von 55 bis 75 Gew.-%, insbesondere 60 bis 70 Gew.-%, die frei von filtrationsunterstützenden Additiven, wie z.B. nichtionischen Tensiden, sind, sind neu und ebenfalls Gegenstand der vorliegenden Erfindung. Als organisches Medium kommt das in der eingesetzten Pigmentsuspension enthaltene in Betracht, wie vorstehend beschrieben.

Die erfindungsgemäßen Pigmentpreßkuchen sowie die daraus hergestellten Pigmentpräparationen können zum Pigmentieren von natürlichen und synthetischen Materialien, wie z.B. Anstrichmittel, Druckfarben, Kunststoffe, elektrophotographische Toner, (Pulver)Lacke, Ink-Jet-Tinten, Farbfilter, Elektretmaterialien und Saatgut, eingesetzt werden. Als Ink-Jet-Tinten kommen solche auf wäßriger oder lösemittelhaltiger Basis oder Hot-melt-Tinten in Betracht. Als elektrophotographische Toner kommen auch solche auf Basis der Blendtechnologie (Extrusion, Kneten) und Polymerisationstoner in Betracht. Als Kunststoffe kommen insbesondere Polymere in Betracht, die für die Herstellung von Masterbatches geeignet sind

### Beispiele

### Beispiel 1

Eine Pigmentsuspension mit 13,3 Gew.-% C.I. Pigment Yellow 16 wurde mit 110 bar über eine in DE-C1-196 32 964 beschriebene Hochdruckfilterpresse, die mit Polypropylenfiltermaterial belegt war, mit einer Filtrationsleistung von 112 kg Trockensubstanz/m²h filtriert. Der dadurch gewonnene Pigmentpreßkuchen enthielt 69,5 Gew.-% Pigment Yellow 16.

Der Pigmentpreßkuchen aus Beispiel 1 wurde in einer Laborperlmühle in ein System aus Wasser/Glykol/Dispergierhilfsmittel 70:20:10 dispergiert, wobei nach 15 Minuten Dispergierzeit eine Farbstärke von 100 % erreicht wurde.

### Vergleichsbeispiel:

Eine vergleichbare Menge Pulverpigment C.I. Pigment Yellow 16 wurde in gleicher Weise dispergiert, wobei dieselbe Farbstärke erst nach 46 Minuten Dispergierzeit erreicht wurde, obwohl der auf 100 % Pigment berechnete Pigmentgehalt in beiden Präparationen identisch war.

### Beispiel 2

Eine Pigmentsuspension mit 15,7 Gew.-% C.I. Pigment Yellow 83 wurde analog Beispiel 1 filtriert. Mit dem erhaltenen Preßkuchen, der 59,8 Gew.-% Pigment enthielt, verkürzte sich die Dispergierzeit (Medium wie in Beispiel 1) um 48 % gegenüber der entsprechenden Pulverware.

### Beispiel 3

In gleicher Weise wie in Beispiel 1 wurden die in der folgenden Tabelle aufgeführten Pigmente aufkonzentriert:

| Pigment | Pigmentgehalt in zugeführter Suspension | Filtrationsdruck | Pigment-Gehalt im Preßkuchen |
|---|---|---|---|
| P. Y. 1 | 15,9 Gew.-% | 110 bar | 67,4 Gew.-% |
| P.Y.97 | 11,8 Gew.-% | 110 bar | 71,4 Gew.-% |
| P. Y. 3 | 17,9 Gew.-% | 110 bar | 67,7 Gew.-% |
| P. Y. 154 | 14,8 Gew.-% | 110 bar | 66,4 Gew.-% |
| | 7,6 Gew.-% | 110 bar | 65,6 Gew.-% |
| | 14,4 Gew.-% | 20 bar | 56,7 Gew.-% |
| P. R. 112 | 15,5 Gew.-% | 110 bar | 58,4 Gew.-% |
| P. V. 23 | 27 Gew.-% | 110 bar | 64,1 Gew.-% |
| P. O. 36 | 39,9 Gew.-% | 100 bar | 71 Gew.-% |
| P. R. 170 | 32,4 Gew.-% | 100 bar | 69,8 Gew.-% |
| P. Y. 151 | 35,6 Gew.-% | 100 bar | 64,8 Gew.-% |

## Patentansprüche

1. Verfahren zur Herstellung von hochkonzentrierten Pigmentpreßkuchen, **dadurch gekennzeichnet, dass** eine Pigmentsuspension auf einer Hochdruckfilterpresse mit einem Preßdruck von mindestens 16 bar ohne Zusatz von nichtionischen Tensiden, die einen Trübungspunkt in Wasser haben, bis zu einem Pigmentgehalt von mindestens 50 Gew.-% aufkonzentriert wird.

2. Verfahren nach Anspruch 1, **dadurch gekennzeichnet, dass** der Preßdruck der Hochdruckfilterpresse 20 bis 120 bar beträgt.

3. Verfahren nach Anspruch 1 oder 2, **dadurch gekennzeichnet, dass** das Pigment ein organisches Pigment ist.

4. Verfahren nach einem oder mehreren der Ansprüche 1 bis 3, **dadurch gekennzeichnet, dass** das Pigment ein Azopigment oder ein polycyclisches Pigment ist.

5. Verfahren nach Anspruch 4, **dadurch gekennzeichnet, dass** das polycyclische Pigment ein Chinacridon, Dioxazin, Phthalocyanin, Perylen, Perinon, Diketopyrrolopyrrol, Anthanthron oder Thioindigopigment ist.

6. Verfahren nach einem oder mehreren der Ansprüche 1 bis 5, **dadurch gekennzeichnet, dass** die eingesetzte Pigmentsuspension einen Pigmentgehalt von 5 bis 40 Gew.-%, vorzugsweise 7 bis 30 Gew.-%, bezogen auf das Gesamtgewicht der Pigmentsuspension, hat.

7. Verfahren nach einem oder mehreren der Ansprüche 1 bis 6, **dadurch gekennzeichnet, dass** die Pigmentsuspension bis zu einem Pigmentgehalt von 50 bis 75 Gew.-% Pigment, bezogen auf das Gesamtgewicht des Pigmentpreßkuchens, aufkonzentriert wird.

8. Verfahren nach einem oder mehreren der Ansprüche 1 bis 7, **dadurch gekennzeichnet, dass** das Medium der Pigmentsuspension und des Pigmentpreßkuchens Wasser ist.

9. Verfahren nach einem oder mehreren der Ansprüche 1 bis 7, **dadurch gekennzeichnet, dass** das Medium der Pigmentsuspension und des Pigmentpreßkuchens ein C₁-C₆-Alkohol, chlorierte Benzole, C₃-C₆-Ketone, C₁-C₆-Carbonsäure-C₁-C₄-alkyl-ester, Xylole, Toluol, Essigsäure, oder ein dipolar aprotisches Lösemittel ist.

10. Pigmentpreßkuchen, bestehend im wesentlichen aus mindestens 55 Gew.-%, bezogen auf das Gesamtgewicht des Pigmentpreßkuchens, eines organischen Pigments aus der Klasse der Azopigmente, Chinacridone, Dioxazine, Phthalocyanine, Perylene, Perinone, Diketopyrrolopyrrole, Anthanthrone und Thioindigo-Pigmente; und Wasser, einem organischen Lösemittel oder einem Gemisch davon, der frei von nichtionischen Tensiden ist.

11. Verwendung eines Pigmentpreßkuchens gemäß Anspruch 10 zur Herstellung einer Pigmentpräparation.

12. Verwendung eines Pigmentpreßkuchens gemäß Anspruch 10, zum Pigmentieren von Anstrichmitteln, Druckfarben, Kunststoffen, elektrophotographischen Tonern, Lacken und Pulverlacken, Ink-Jet-Tinten, Farbfiltern, Elektretmaterialien und Saatgut.

## Claims

1. A process for producing a highly concentrated pigment presscake, which comprises concentrating a pigment suspension on a highpressure filter press with a pressure of at least 16 bar to a pigment content of at least 50% by weight without adding nonionic surfactants which have a cloud point in water.

2. The process as claimed in claim 1, wherein the pressure of the highpressure filter press is from 20 to 120 bar.

3. The process as claimed in claim 1 or 2, wherein the pigment is an organic pigment.

4. The process as claimed in one or more of claims 1 to 3, wherein the pigment is an azo pigment or a polycyclic pigment.

5. The process as claimed in claim 4, wherein the polycyclic pigment is a quinacridone, dioxazine, phthalocyanine, perylene, perinone, diketopyrrolopyrrole, anthanthrone or thioindigo pigment.

6. The process as claimed in one or more of claims 1 to 5, wherein the pigment suspension used has a pigment content of from 5 to 40% by weight, preferably from 7 to 30% by weight, based on the overall weight of the pigment suspension.

7. The process as claimed in one or more of claims 1 to 6, wherein the pigment suspension is concentrated to a pigment content of from 50 to 75% by weight of pigment, based on the overall weight of the pigment presscake.

8. The process as claimed in one or more of claims 1 to 7, wherein the medium of the pigment suspension and of the pigment presscake is water.

9. The process as claimed in one or more of claims 1 to 7, wherein the medium of the pigment suspension and of the pigment presscake is a C₁-C₆ alcohol, chlorinated benzenes, C₃-C₆ ketones, C₁-C₆ carboxylic acid C₁-C₄ alkyl esters, xylenes, toluene, acetic acid, or a dipolar aprotic solvent.

10. A pigment presscake consisting essentially of at least 55% by weight, based on the overall weight of the pigment presscake, of an organic pigment from the class of the azo pigments, quinacridones, dioxazines, phthalocyanines, perylenes, perinones, diketopyrrolopyrroles, anthanthrones and thioindigo pigments; and of water, an organic solvent, or a mixture thereof, which is free of nonionic surfactants.

11. The use of a pigment presscake as claimed in claim 10 for preparing a pigment preparation.

12. The use of a pigment presscake as claimed in claim 10 to pigment paints, printing inks, plastics, electrophotographic toners, coating materials, including powder coating materials, ink-jet inks, color filters, electret materials, and seed.

## Revendications

1. Procédé pour la fabrication de gâteaux de filtration de pigments de forte concentration, **caractérisé en ce qu'**on concentre une suspension de pigments sur un filtre-presse à haute pression avec une pression de filtration d'au moins 16 bars sans addition d'agents tensio-actifs non ioniques, qui ont un point de trouble dans l'eau, jusqu'à une concentration en pigments d'au moins 50 % en poids.

2. Procédé selon la revendication 1, **caractérisé en ce que** la pression de filtration du filtre-presse à haute pression est de 20 à 120 bars.

3. Procédé selon la revendication 1 ou 2, **caractérisé en ce que** le pigment est un pigment organique.

4. Procédé selon une ou plusieurs des revendications 1 à 3, **caractérisé en ce que** le pigment est un pigment azoïque ou un pigment polycyclique.

5. Procédé selon la revendication 4, **caractérisé en ce que** le pigment polycyclique est la quinacridone, la dioxazine, la phtalocyanine, le perylène, la périnone, le dicétopyrrolopyrrole, l'anthanthrone ou le pigment thio-indigo.

6. Procédé selon une ou plusieurs des revendications 1 à 5, **caractérisé en ce que** la suspension de pigments utilisée a une concentration de pigments de 5 à 40 % en poids, de préférence de 7 à 30 % en poids, par rapport au poids total de la suspension de pigments.

7. Procédé selon une ou plusieurs des revendications 1 à 6, **caractérisé en ce que** la suspension de pigments est concentrée jusqu'à une concentration de pigments de 50 à 75 % en poids de pigments, par rapport au poids total du gâteau de filtration de pigments.

8. Procédé selon une ou plusieurs des revendications 1 à 7, **caractérisé en ce que** le milieu de la suspension de pigments et du gâteau de filtration de pigments est l'eau.

9. Procédé selon une ou plusieurs des revendications 1 à 7, **caractérisé en ce que** les milieux de la suspension de pigments et du gâteau de filtration de pigments est un alcool en C₁ à C₆, des benzènes chlorés, des cétones en C₃ à C₆, des esters alkyliques en C₁ à C₄ d'acides carboxyliques en C₁ à C₆, des xylènes, le toluène, l'acide acétique, ou un solvant aprotique dipolaire.

10. Gâteau de filtration de pigments, constitué essentiellement d'au moins 55 % en poids, par rapport au poids total du gâteau de filtration de pigments, d'un pigment organique dans la classe des pigments azoïques, de la quinacridone, de la dioxazine, de la phtalocyanine, du perylène, de la périnone, du dicétopyrrolopyrrole, de l'anthanthrone ou du pigment thio-indigo ; et d'eau, un solvant organique ou un mélange de ceux-ci, qui est dénué d'agents tensio-actifs non ioniques.

11. Utilisation d'un gâteau de filtration de pigments selon la revendication 10 pour la fabrication d'une préparation de pigments.

12. Utilisation d'un gâteau de filtration de pigments selon la revendication 10, pour la pigmentation de peintures, de colorants d'impression, de matières plastiques, de toners électrophotographiques, de peintures et de peintures en poudre, d'encres pour jet d'encre, de filtres de couleur, de matériaux d'électret et de semences.
